# FASCICULE DE BREVET EUROPEEN

(11) **EP 0 696 750 B1**
(45) Date de publication et mention de la délivrance du brevet: **21.11.2001**
(21) Numéro de dépôt: 95401841.2
(22) Date de dépôt: 04.08.1995
(51) Int. Cl.: G02B 6/44

(54) **Procédé de fabrication d'un câble à fibres optiques renforcé; dispositif pour la mise en oeuvre de ce procédé et câble obtenu par ce procédé**
Herstellungsverfahren für ein verstärktes faseroptisches Kabel, zugehörige Vorrichtung und Kabel mittels diesem Verfahren gefertigt
Manufacturing method of a reinforced fiberoptical cable, apparatus and cable obtained by this method

(30) Priorité: 10.08.1994 FR 9409902
(43) Date de publication de la demande: 14.02.1996
(73) Titulaire: ALCATEL, 75008 Paris (FR)
(72) Inventeur: Bonicel, Jean-Pierre, F-92500 Rueil Malmaison (FR)
(74) Mandataire: Laroche, Danièle

(56) Documents cités:
- EP-A- 0 113 377
- EP-A- 0 261 675
- EP-A- 0 492 206
- CH-A- 661 800
- DE-A- 3 214 603
- GB-A- 2 169 095
- US-A- 4 770 489

## Description

La présente invention concerne un procédé de fabrication d'un câble à fibres optiques renforcé, un dispositif pour la mise en oeuvre de ce procédé ainsi qu'un câble obtenu par ce procédé.

Les structures de câbles à fibres optiques connues actuellement sont de plusieurs types : il existe notamment des câbles à fibres optiques dans lesquels les fibres optiques sont laissées libres ou disposées en rubans dans un tube central, ou bien des câbles à fibres optiques dans lesquels les fibres optiques sont disposées dans les rainures hélicoïdales d'un jonc central rainuré. D'autres structures existent, qui ne seront pas décrites plus en détail ici, mais auxquelles peut également être appliquée la présente invention.

Dans toutes les structures de câbles à fibres optiques, il est nécessaire de prévoir des éléments de renfort mécanique afin d'éviter que les fibres optiques soient soumises à des efforts importants, notamment des efforts de traction et de flexion lors de l'installation du câble dans une conduite ou lorsque le câble est suspendu, ce qui est de plus en plus courant actuellement pour les câbles à fibres optiques. Les éléments de renfort mécanique servent également à reprendre les effets des variations de longueur des différents éléments du câble hormis les fibres optiques (élément porteur central sous forme par exemple de tube ou de jonc rainuré, gaines de protection) lorsque ce dernier est soumis à des variations de températures importantes. Ainsi, ces éléments de renfort doivent avoir un coefficient de dilatation thermique plus faible que celui du reste du câble et un module d'Young plus élevé que celui du reste du câble (hormis fibres optiques qui ont notamment un coefficient de dilatation beaucoup plus faible que celui des autres éléments du câble).

Ces éléments de renfort peuvent être métalliques ou diélectriques. On préfère les éléments de renfort non métalliques, c'est-à-dire non conducteurs de l'électricité, pour éviter les risques de dégradations dus à la foudre et les problèmes de tensions induites. On utilise donc actuellement des éléments de renfort diélectriques, c'est-à-dire constitués de matériaux non conducteurs.

Pour jouer le rôle de ces éléments de renfort, les matériaux plastiques renforcés de fibres de renfort sont particulièrement adaptés. Ces matériaux, couramment dénommés "Fiber Reinforced Plastics" (ou FRP) en anglais, comprennent des fibres de renfort, par exemple des fibres d'aramide, par exemple commercialisées sous la marque Kevlar, de polyester, de verre, noyées dans une résine telle qu'une résine époxy ou polyester par exemple. Les propriétés de ces matériaux les rendent particulièrement adaptés à une utilisation dans des câbles à fibres optiques pour assurer le renfort mécanique.

La réalisation de câbles à fibres optiques utilisant des éléments de renfort constitués de matériaux FRP peut prendre deux formes.

Dans une première forme de réalisation, dont le résultat est illustré par exemple dans le brevet US-4 770 489, en figuré 3B de ce brevet, où l'on voit que l'âme optique, constituée par exemple d'un tube contenant des fibres optiques libres, est entourée d'une pluralité d'éléments de renfort en un matériau FRP, chacun des éléments de renfort est fabriqué séparément à partir de mèches de fibres de renfort que l'on enduit de résine, puis ces éléments sont câblés sur l'âme optique, c'est-à-dire assemblés en hélice autour de cette dernière, lors d'une opération ultérieure distincte de câblage. La structure de câble obtenue est avantageuse car elle assure au câble une relative souplesse et lui confère les propriétés de tenue mécanique recherchées.

Ce type de réalisation pose toutefois certains problèmes.

En premier lieu, le fait de réaliser séparément les éléments de renfort est onéreux.

En outre, cette réalisation nécessite, en plus de l'opération de fabrication complète des éléments de renfort, une opération de câblage ultérieure, ce qui rend la fabrication du câble longue et complexe, et par conséquent onéreuse.

Une deuxième forme de réalisation connue, dont le résultat est illustré dans le brevet US-4 770 489, en figure 2A de ce brevet, permet de résoudre les problèmes précédents. Dans cette forme de réalisation, on réalise un tube en un matériau FRP autour de l'âme optique, par exemple par une opération dite de pultrusion (par opposition à l'extrusion), qui consiste, sur une ligne de fabrication, à amener des mèches de fibres de renfort au voisinage de l'âme optique puis à faire défiler l'ensemble, en le tirant, successivement à travers un bain d'enduction de résine, une filière de calibrage pour conférer au câble la section souhaitée, et enfin un dispositif de polymérisation de la résine.

Le procédé de pultrusion permettant de réaliser autour d'un élément quelconque un tube en un matériau FRP est décrit en détail dans la demande de brevet EP-0 284 667 (dans ce document, le tube est réalisé directement autour d'une fibre optique).

Cette deuxième forme de réalisation est avantageuse car elle est bien moins onéreuse à mettre en oeuvre que la première forme décrite précédemment. En effet, la fabrication de l'élément de renfort est effectuée en une seule opération directement autour de l'âme optique. De plus, la structure obtenue présente les caractéristiques mécaniques recherchées.

Toutefois, cette structure est très rigide, de sorte que son installation dans des conduites sous terre ou bien sa suspension à des pylônes pose problème.

La présente invention a pour but de mettre au point un procédé de fabrication d'un câble à fibres optiques renforcé au moyen d'éléments de renfort en un matériau FRP, qui soit peu onéreux à mettre en oeuvre et permette de réaliser un câble à la fois souple et présentant les caractéristiques mécaniques requises.

La présente invention propose à cet effet un procédé de fabrication d'un câble à fibres optiques renforcé comprenant les étapes comme revendiquées par la revendcation 1.

Le procédé selon l'invention associe les avantages des deux formes de réalisation de l'art antérieur, c'est-à-dire le faible coût de réalisation et la possibilité d'obtenir un câble souple, sans en avoir les inconvénients.

En effet, grâce à l'utilisation de séparateurs choisis en un matériau adhérant faiblement aux éléments de renfort, il est possible de réaliser chacun de ces éléments séparément mais simultanément et directement autour de l'âme optique par une seule opération de pultrusion. Les séparateurs permettent ainsi de découpler les uns des autres les éléments de renfort pendant la pultrusion, de manière à ne pas obtenir un tube intégral comme dans la deuxième forme de réalisation de l'art antérieur, et assurent la souplesse du câble et son faible coût de fabrication.

La présente invention concerne également des dispositifs de mise en oeuvre du procédé selon l'invention, tels qu'indiqués dans les revendications 13 et 15.

Par rapport aux dispositifs de pultrusion classique, les dispositifs selon l'invention comprennent des moyens d'approvisionnement en séparateurs, sont par exemple à émission et réception tournantes, pour donner aux fibres de renfort et aux éléments de renfort qui les contiennent une structure hélicoïdale dans le câble (d'autres moyens connus et équivalents peuvent être utilisés à cet effet), et sont tels qu'ils permettent de réaliser la polymérisation des éléments de renfort une fois que ceux-ci ont été déposés sur l'âme optique pour être intercalés avec les séparateurs.

Enfin, la présente invention concerne un câble à fibres optiques renforcé tel qu'indiqué dans la revendication 16.

De manière avantageuse, pour ne pas adhérer au matériau constituant les éléments de renfort, les séparateurs peuvent être en résine fluorée ou en résine polyester.

Pour ne pas subir de dégradations de leurs propriétés lors de l'opération de polymérisation, les séparateurs peuvent être en un matériau dont les propriétés de faible adhérence sont conservées lorsqu'il est soumis à des températures élevées.

Les éléments de renfort peuvent être disposés immédiatement sur l'âme optique, ou sur une gaine déposée sur cette dernière.

Selon un mode de mise en oeuvre possible de l'invention, les séparateurs peuvent être constitués de minces rubans ayant une largeur sensiblement égale à l'épaisseur du tube de renfort.

Selon un autre mode de réalisation possible de l'invention, les séparateurs peuvent être constitués par les nervures d'un jonc rainuré dit extérieur entourant l'âme optique, les éléments de renfort étant insérés dans les rainures de ce jonc.

D'autres caractéristiques et avantages de la présente invention apparaîtront dans la description suivante de plusieurs modes de réalisation d'un câble selon l'invention, ainsi que d'un procédé et d'un dispositif de fabrication d'un tel câble, donnés à titre illustratif et nullement limitatif.

Dans les figures suivantes :
- la figure 1 est une vue en perspective d'un premier mode de réalisation d'un câble à fibres optiques selon l'invention,
- la figure 2 est une vue en perspective d'un second mode de réalisation d'un câble à fibres optiques selon l'invention,
- la figure 3 est une vue en perspective d'un troisième mode de réalisation d'un câble à fibres optiques selon l'invention,
- la figure 4 est une vue schématique d'un dispositif selon l'invention.

Dans ces figures, les éléments communs portent les mêmes numéros de référence.

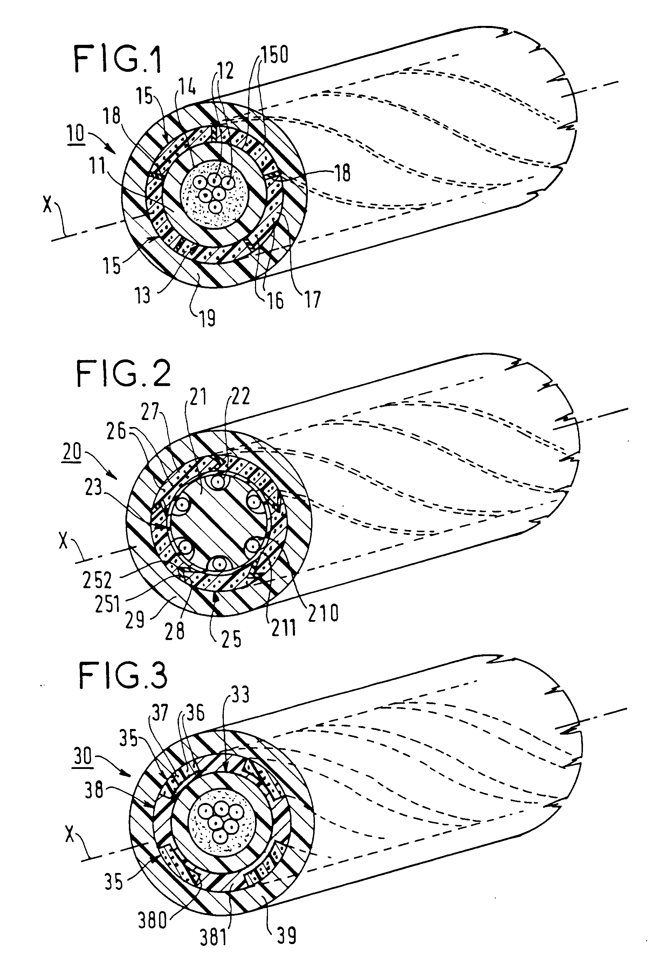

On voit en figure 1 un câble à fibres optiques 10 selon un premier mode de réalisation de la présente invention. Le câble 10 comprend un tube central 11 par exemple en nylon, en polyester, en polypropylène ou tout autre matériau adapté, qui contient une pluralité de fibres optiques 12 revêtues de leur revêtement de résine (non référencé). L'ensemble du tube 11 et des fibres optiques 12 qu'il contient est dénommé "âme optique" et référencé 13. Eventuellement, le tube 11 peut être rempli d'un gel de remplissage ou d'un matériau gonflant à l'eau 14 servant notamment à protéger les fibres 12 contre la pénétration de l'humidité.

L'âme optique 13 est directement entourée d'une pluralité d'éléments de renfort 15 en un matériau FRP. Plus précisément, chacun des éléments de renfort est constitué de mèches de fibres de renfort 16 telles que des fibres d'aramide, commercialisées par exemple sous la marque Kevlar, de polyester, de verre, de carbone, ou autres, noyées dans une résine 17 de type résine époxy ou résine polyester, de sorte que le module d'Young des éléments de renfort 15 est plus élevé et son coefficient de dilatation thermique plus faible que celui du reste du câble 10, hors fibres optiques. Les éléments de renfort 15 sont disposés en hélice, avec un pas constant ou alterné (c'est-à-dire SZ), autour de l'âme optique 13.

Les fibres de renfort 16 peuvent elles-mêmes être disposées en hélice à l'intérieur des éléments de renfort 15.

Selon l'invention, les éléments de renfort 15 sont séparés les uns des autres par un mince ruban 18 en un matériau adhérant faiblement à la résine 17 ; les rubans 18 peuvent être par exemple en résine fluorée ou en résine polyester, selon la résine 17 des éléments 15.

Dans le mode de réalisation de la figure 1, les rubans 18 constituent des séparateurs disposés radialement par rapport à l'axe X du câble 1.

Comme on l'a vu plus haut, l'utilisation de rubans 18 permet de découpler mécaniquement les éléments de renfort 15 les uns des autres, pour obtenir une structure du type de cette de la première forme de réalisation décrite en relation avec l'état antérieur de la technique, de sorte que la souplesse du câble 10 est grande. Ces rubans séparateurs 18 permettent également de réaliser plusieurs éléments de renfort 15 (et non pas un seul tube de renfort rigide, comme c'est le cas dans la deuxième forme de réalisation décrite en relation avec l'état antérieur de la technique) séparément et simultanément par pultrusion et de les enrouler directement autour de l'âme optique 13 pendant leur fabrication, avant la polymérisation de la résine 17, pour obtenir un coût de fabrication relativement faible.

Autour des éléments de renfort 15, on trouve une gaine extérieure de protection 19 du câble 10. Cette gaine peut être constituée de tout type de matériau extrudable (polyoléfines, compounds, résines fluorées, etc...), et en particulier de matériaux dont les propriétés sont conservées même en présence de champs électriques élevés, notamment lorsque le câble selon l'invention est destiné à être suspendu au voisinage de lignes haute tension ou très haute tension. Il est à noter que l'état de surface extérieur des éléments de renfort 15 n'étant pas lisse, ces derniers ont ainsi une bonne adhésion sur la gaine 19.

Comme on le voit en figure 1, les éléments de renfort 15 ont une section transversale sensiblement trapézoïdale, leurs grands côtés 150 étant incurvés pour pouvoir épouser la courbure de l'âme optique 13. Ceci garantit la compacité du câble 10.

On voit en figure 2 un câble 20 selon l'invention, dans un deuxième mode de réalisation.

L'âme optique 23 du câble 20 diffère de l'âme optique 13 du câble 10 en ce qu'elle est du type à jonc rainuré 21. Le jonc rainuré 21, constitué par exemple en un matériau du même type que ceux indiqués pour le tube 11, présente une pluralité de rainures 210, chacune destinée à loger une ou plusieurs fibres optiques revêtues 22. Un ruban de polyester ou de papier 211 peut être enroulé autour du jonc 21 de manière à retenir les fibres 22 ainsi qu'un éventuel gel de remplissage (non représenté) contenu dans les rainures 210.

Autour de l'âme optique 23 ainsi constituée se trouve une pluralité d'éléments de renfort 25 en un matériau FRP, constitués chacun de mèches de fibres de renfort 26 noyées dans une résine 27. La seule différence entre les éléments de renfort 25 et les éléments de renfort 15 de la figure 1 réside dans leur section transversale : en figure 2, la section des éléments de renfort 15 est telle que leurs petits côtés 251, ainsi que les rubans séparateurs 28 (en un matériau ayant les mêmes propriétés que ceux décrits pour les rubans 18), ne sont pas sensiblement rectilignes, mais ont une section en double biseau formant une pointe 252 de sorte que les éléments de renfort 25 s'emboîtent les uns dans les autres. Ceci a pour avantage d'améliorer l'effet de voûte du câble 20 par rapport au câble 10, c'est-à-dire d'améliorer le contact entre éléments de renfort 25 en accroissant la surface de contact entre ces derniers, ceci pour maintenir tous les éléments de renfort 25 en place même lorsque le câble 20 est soumis à des efforts radiaux importants.

Enfin, une gaine extérieure de protection 29, du même type que la gaine 19 du câble 10, est disposée autour des éléments de renfort 25.

Les éléments de renfort 25 et les rubans 28 présentent les mêmes avantages que ceux indiqués en relation avec les éléments de renfort 15 et les rubans 18 de la figure 1.

On voit en figure 3 un câble 30. Dans le câble 30, l'âme optique 33 est identique à l'âme optique 13 du câble 1 de la figure 1. Autour de l'âme optique 33, on a extrudé un jonc rainuré 38, qui présente des nervures 380 et des rainures 381. A l'intérieur des rainures 381 sont disposés des éléments de renfort 35 de section sensiblement trapézoïdale, occupant sensiblement tout l'espace défini par les rainures 381 et semblables aux éléments de renfort 15. Le rôle de séparateurs est joué ici par les nervures 380 du jonc rainuré 38. A cet effet, le jonc rainuré 38 est en un matériau adhérant faiblement à la résine 37 enrobant les fibres de renfort 36 des éléments de renfort 35.

Autour du jonc rainuré 38 est disposée une gaine extérieure de protection 39 du même type que la gaine 19 du câble 10.

Les éléments de renfort 35 et les nervures 381 présentent les mêmes avantages que ceux indiqués en relation avec les éléments de renfort 15, respectivement 25, et les rubans 18, respectivement 28, des figures 1 et 2.

A titre d'exemple, on indique que, dans tous les modes de réalisation qui viennent d'être décrits, le diamètre de l'âme optique 13, 23 ou 33 peut être de 3 à 10 mm dans le cas des câbles optiques autoportés (c'est-à-dire destinés à être suspendus à des pylônes), l'épaisseur des éléments de renfort 15, 25 ou 35 de 1 à 5 mm selon la résistance à la traction recherchée, la largeur des rubans 18 sensiblement égale à l'épaisseur radiale des éléments de renfort 15, l'épaisseur des rubans 18 ou 28 de l'ordre de 10 à 50 µm.

A titre d'exemple, le module d'Young des fibres de renfort 16 est de 5000 daN/mm² lorsque ces fibres sont des fibres de verre, et de 6500 à 7000 daN/mm² lorsque ce sont des fibres d'aramide.

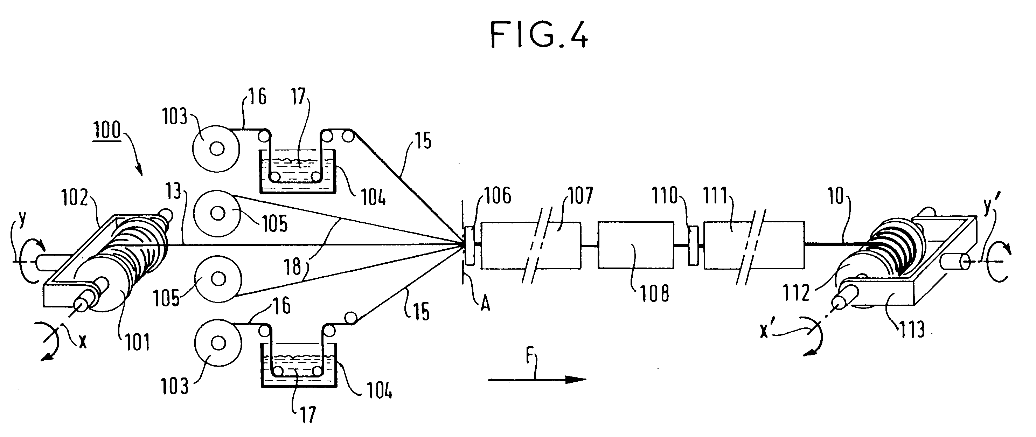

On va maintenant décrire, en relation avec la figure 4, un dispositif 100 selon l'invention permettant de fabriquer le câble 10 de la figure 1, ainsi que le procédé de fabrication selon l'invention.

Selon l'invention, la fabrication du câble 10 s'effectue en continu pour ce qui est de la réalisation des éléments de renfort 15 et de leur câblage sur l'âme optique 13.

Le dispositif 100 comprend ainsi une bobine 101 pour dévider l'âme optique 13 le long d'un axe Y dit de défilement. La bobine 101 est donc tournante autour de son axe x, orthogonal au plan de la figure 4. Elle est en outre montée sur un support 102 tournant autour de l'axe Y.

En aval de la bobine 101 par rapport au sens de défilement (représenté par la flèche F) de l'âme optique 13 dans le dispositif 100, on trouve plusieurs bobines 103 (seules deux de ces bobines ont été représentées à la figure 4 pour des raisons de clarté) d'approvisionnement en mèches de fibres de renfort 16, pour amener les mèches de fibres 16 au voisinage de l'âme optique 13 au niveau d'une section A du dispositif 100.

Entre les bobines 103 et la section A, on trouve plusieurs bains d'enduction 104 (un par ligne d'approvisionnement en mèches de fibres 16), contenant la résine 17 non polymérisée, pour enduire les mèches de fibres 16 de la résine 17 avant que ces dernières arrivent au niveau de la section A.

Le dispositif 100 comprend également, en amont de la section A par rapport au sens de défilement représenté par la flèche F, plusieurs galettes 105 d'approvisionnement en rubans 18 (en pratique, autant de galettes 105 que d'éléments de renfort 15, puisqu'il faut un ruban 18 entre deux éléments de renfort 15). Les galettes 105 sont disposés par rapport aux bobines 103 de sorte les rubans 18 puissent s'enrouler en alternance avec les éléments de renfort 15 autour de l'âme 13, de manière à être interposés entre les éléments de renfort 15.

Au niveau de la section A, grâce au fait que la bobine 101 tourne autour de l'axe Y, ainsi que la bobine d'enroulement 112 du câble 10 terminé (voir plus loin), les éléments de renfort 15 (dont la résine n'est pas encore polymérisée) et les rubans 18 s'enroulent hélicoïdalement autour de l'âme optique 13 de sorte que, de par la disposition adaptée des galettes 105 par rapport aux bobines 103, l'on trouve toujours un ruban 18 entre deux éléments de renfort 15.

L'ensemble passe ensuite, en aval de la section A, dans une filière de calibrage 106 servant à lui donner la section désirée, par exemple mais non nécessairement une section circulaire, puis dans un four de polymérisation 107 de la résine 17.

Etant donné les températures nécessaires à la polymérisation de la résine 17 (en général de l'ordre de 150°C), il est important de choisir le matériau du ruban 18 pour qu'il résiste à ces températures.

Après la polymérisation, on réalise la gaine 19 en faisant passer l'ensemble âme optique 13+éléments de renfort 15 dans un bain 108 contenant le matériau destiné à constituer la gaine 19, puis dans une filière 110 pour donner à cette gaine la section souhaitée, et enfin dans un four de cuisson 111 pour polymériser ce matériau. Il est également possible de réaliser la gaine 19 par extrusion.

En bout de ligne, on trouve une bobine d'enroulement 112 du câble 10 terminé, tournant autour de son axe x' (parallèle à l'axe x de la bobine 101), et montée sur un support 113 tournant autour de l'axe X en phase avec le support 102 de la bobine 101.

Le dispositif qui vient d'être décrit peut être adapté sans problème au moyen d'opérations de routine par l'homme du métier pour fabriquer n'importe quel type de câble selon l'invention.

Par exemple, pour réaliser le câble 20 de la figure 2, c'est-à-dire pour conférer aux éléments de renfort leur section transversale particulière, on peut utiliser pour réaliser les séparateurs 28, préalablement à la fabrication du câble 20 ou en tandem avec cette dernière, des filières de mise en forme à chaud en choisissant le matériau constituant les séparateurs 28 tel qu'il soit thermoformable.

Pour fabriquer le câble 30 de la figure 3, on peut réaliser, par extrusion par exemple, le jonc rainuré 38 au préalable, lors de la fabrication de l'âme optique 33, de sorte que cette dernière est dévidée dans le dispositif 100 déjà munie du jonc 38. Dans ce cas, les éléments de renfort 35 non polymérisés sont insérés dans les rainures 381 préalablement à leur polymérisation, et l'ensemble subit ensuite le calibrage puis la polymérisation.

Il est également possible de réaliser le jonc rainuré 38 au sein du dispositif 100, et ce en amont du dépôt dans ce dernier des éléments de renfort non polymérisés 35.

Ainsi, de manière générale, pour fabriquer un câble selon l'invention, on fabrique partiellement les éléments de renfort avant de les enrouler autour de l'âme optique, c'est-à-dire que l'on enduit les fibres de renfort du matériau plastique dans lequel elles sont destinées à être noyées, et que la polymérisation n'est effectuée qu'après le câblage. Ceci permet donc d'effectuer en continu la fabrication des éléments de renfort et leur câblage sur l'âme optique. Les éléments de renfort n'étant pas polymérisés au moment du câblage, ce sont les séparateurs intercalés entre les éléments de renfort, et dont le matériau est tel qu'ils adhèrent peu à ces derniers, qui permettent de maintenir les éléments de renfort découplés les uns des autres, afin d'obtenir la souplesse souhaitée (comme dans la première forme de réalisation décrite en relation avec l'état antérieur de la technique), même après la polymérisation réalisée à l'issue du câblage.

Bien évidemment, la présente invention n'est pas limitée aux modes de réalisation qui viennent d'être décrits.

En premier lieu, dans les modes de réalisation décrits en relation avec les figures 1 et 2, les séparateurs 18 ou 28 sous forme de rubans peuvent être de largeur beaucoup plus importante que celle des éléments de renfort 15 ou 25, et venir par exemple entourer en tout ou en partie ces derniers, du moment que deux éléments de renfort adjacents ne sont pas en contact l'un avec l'autre mais séparés l'un de l'autre par un séparateur.

Dans ce cas, pour la fabrication d'un câble selon l'invention, on choisit des rubans de largeur adaptée pour venir entourer en tout ou en partie les éléments de renfort 15 ou 25 et l'on dispose sur la ligne de fabrication des filières spécifiques permettant de refermer entièrement ou partiellement les rubans 18 ou 28 autour des éléments de renfort 15 ou 25. De telles filières sont bien connues en câblerie.

Par ailleurs, dans un câble selon l'invention, n'importe quel type d'âme optique peut être associé à n'importe quel type de séparateurs, et de manière plus générale, la structure des éléments d'un câble selon l'invention autres que les éléments de renfort et séparateurs peut prendre toute forme connue.

En outre, les éléments de renfort peuvent être disposés immédiatement au-dessus de l'âme optique, ou bien sur une gaine intermédiaire déposée, elle, immédiatement sur l'âme optique.

Les éléments de renfort peuvent être assemblés autour de l'âme à pas variable ou constant, et éventuellement alterné. Leur section transversale n'est pas limitée aux exemples donnés aux figures 1 à 3, et elle peut être quelconque.

Les matériaux utilisés pour les différents éléments du câble selon l'invention sont des matériaux classiques, choisis de sorte que leurs caractéristiques soient adaptées à leur utilisation au sein d'un câble à fibres optiques. Les exemples donnés ne sont donc pas limitatifs.

Les valeurs numériques données le sont également uniquement à titre illustratif.

D'autre part, un câble selon l'invention peut être suspendu, installé en pleine terre ou dans une conduite. Outre les éléments de renfort 15, 25 ou 35, il peut contenir d'autres éléments de renfort disposés à l'intérieur de l'âme optique, par exemple avec les fibres dans le tube central, ou bien sous forme de porteur central dans le jonc rainuré.

De manière générale, un câble selon l'invention peut être utilisé dans tout type d'applications pour câbles à fibres optiques, et notamment dans les applications terrestres ou sous-marines.

Enfin, on pourra remplacer tout moyen par un moyen équivalent sans sortir du cadre de l'invention.

## Revendications

1. Procédé de fabrication d'un câble à fibres optiques (10) renforcé comprenant une âme optique (13) contenant au moins une fibre optique (12), installée dans un élément porteur, ladite âme optique étant entourée d'une pluralité d'éléments (15) de renfort mécanique en un matériau plastique renforcé de fibres de renfort, dit matériau FRP, disposés en hélice autour de ladite âme pour former un tube de renfort autour de cette dernière, lesdits éléments de renfort ayant un coefficient de dilatation thermique inférieur à celui du reste dudit câble et un module d'Young plus élevé que celui du reste dudit câble, hormis lesdites fibres optiques, ledit procédé comprenant les opérations suivantes dans l'ordre:
- fabrication desdits éléments de renfort séparément et simultanément par enduction desdites fibres de renfort au moyen du matériau plastique dans lequel elles sont destinées à être noyées, ledit matériau n'étant pas polymérisé,
- enroulement desdits éléments de renfort autour de ladite âme optique, en intercalant un séparateur en un matériau plastique présentant une faible adhérence audit matériau FRP entre chacun desdits éléments de renfort, pour séparer chacun desdits éléments de renfort des éléments de renfort voisins au moyen desdits séparateurs disposés de sorte que deux éléments de renfort adjacents ne se trouvent pas en contact l'un avec l'autre et sont séparés l'un de l'autre par une partie au moins de l'un desdits séparateurs (18),
- polymérisation dudit matériau plastique et constitutif desdits éléments de renfort ainsi enroulés.

2. Procédé selon la revendication 1 dans lequel lesdits séparateurs (18) sont en un matériau choisi parmi les résines fluorées et les résines polyester.

3. Procédé selon l'une des revendications 1 ou 2 dans lequel lesdits séparateurs (18) sont en un matériau dont les propriétés de faible adhérence sont conservées lorsqu'il est soumis à des températures élevées.

4. Procédé selon l'une des revendications 1 à 3 dans lequel lesdits séparateurs (18) entourent entièrement ou partiellement chacun desdits éléments de renfort.

5. Procédé selon l'une des revendications 1 à 4 dans lequel lesdits éléments (15) de renfort sont disposés immédiatement sur ladite âme optique (13).

6. Procédé selon l'une des revendications 1 à 4 dans lequel lesdits éléments de renfort sont disposés sur une gaine entourant ladite âme optique.

7. Procédé selon l'une des revendications 1 à 6 dans lequel lesdits éléments (15) de renfort sont disposés en hélice à pas alterné autour de ladite âme optique (13).

8. Procédé selon l'une des revendications 1 à 7 dans lequel comprenant une étape de formation d'une gaine de protection extérieure (19).

9. Procédé selon l'une des revendications 1 à 8 dans lequel ladite âme optique (13) comporte un tube dans lequel la ou les fibres optiques (12) sont disposées librement.

10. Procédé selon l'une des revendications 1 à 8 dans lequel ladite âme optique (13) comporte un jonc central (21) rainuré, dans les rainures duquel sont disposées la ou les fibres optiques (12).

11. Procédé selon l'une des revendications 1 à 10 dans lequel lesdites fibres de renfort (16) sont choisies parmi les fibres d'aramide, de polyester, de verre et de carbone.

12. Procédé selon l'une des revendications 1 à 11 dans lequel ledit matériau plastique dans lequel les fibres de renfort (16) sont noyées est choisi parmi une résine époxy et une résine polyester.

13. Dispositif (100) pour la mise en oeuvre du procédé selon l'une des revendications 1 à 9, 11 et 12 comprenant :
- des moyens de dévidage (101) pour dévider ladite âme optique le long d'un axe dit axe de défilement,
- des moyens d'approvisionnement (103) en mèches de fibres de renfort, pour amener lesdites mèches à proximité de ladite âme optique,
- des moyens d'enduction (104) desdites fibres de renfort par le matériau plastique non encore polymérisé dans lequel elles sont destinées à être noyées, lesdits moyens d'enduction étant disposés entre lesdits moyens d'approvisionnement en fibres de renfort et ledit axe de défilement, de sorte que lesdits mèches de fibres de renfort arrivent au niveau de ladite âme une fois enduites dudit matériau plastique,
- des moyens d'approvisionnement (105) en séparateurs (18) pour amener lesdits séparateurs au voisinage de ladite âme optique,
- des moyens (112) pour enrouler lesdits éléments de renfort et lesdits séparateurs autour de ladite âme optique, lesdits moyens d'approvisionnement (103) étant disposés de sorte que lesdits éléments de renfort s'enroulent autour de ladite âme en étant intercalés entre lesdits séparateurs,
- une filière (106) de calibrage disposée en aval de la section du dispositif au niveau de laquelle séparateurs et mèches de fibres enduites s'enroulent autour de ladite âme,
pour donner au tube de renfort ainsi constitué la section souhaitée,
- des moyens (107) pour polymériser ledit matériau plastique des éléments de renfort, disposés en aval de ladite filière de calibrage
- des moyens (112) pour enrouler le câble terminé.

14. Dispositif selon la revendication 13 comprenant en outre, lorsque lesdits séparateurs ont une largeur supérieure à l'épaisseur dudit tube de renfort, des moyens pour entourer chacun desdits éléments de renfort partiellement ou entièrement au moyen desdits séparateurs.

15. Dispositif de mise en oeuvre du procédé selon l'une des revendications 1 à 8, 10 à 12 comprenant:
- des moyens de dévidage pour dévider ladite âme optique le long d'un axe dit axe de défilement,
- des moyens pour fabriquer autour de ladite âme optique un jonc rainuré dit extérieur, lesdits séparateurs étant constitués par les nervures dudit jonc rainuré extérieur,
- des moyens d'approvisionnement en mèches de fibres de renfort, pour amener lesdites mèches à proximité de ladite âme optique,
- des moyens d'enduction desdites fibres de renfort par le matériau plastique dans lequel elles sont destinées à être noyées, lesdits moyens d'enduction étant disposés entre lesdits moyens d'approvisionnement en fibres de renfort et ledit axe de défilement,
- des moyens pour insérer lesdites mèches de fibres de renfort dans les rainures dudit jonc rainuré extérieur une fois enduites dudit matériau plastique,
- une filière de calibrage disposée en aval de la section du dispositif au niveau de laquelle lesdites mèches de fibres enduites sont insérées dans lesdites rainures dudit jonc rainuré extérieur, pour donner au tube de renfort ainsi constitué la section souhaitée,
- des moyens pour polymériser ledit matériau plastique des éléments de renfort disposés en aval de ladite filière de calibrage,
- des moyens pour enrouler le câble terminé.

16. Câble à fibres optiques renforcé comprenant une âme optique (13) contenant au moins une fibre optique (12), installée dans un élément porteur, ladite âme optique (13) étant entourée d'une pluralité d'éléments (15) de renfort mécanique en un matériau plastique renforcé de fibres (16) de renfort, dit matériau FRP, disposés en hélice autour de ladite âme (13) pour former un tube de renfort autour de cette dernière, lesdits éléments (15) de renfort ayant un coefficient de dilatation thermique inférieur à celui du reste dudit câble et un module d'Young plus élevé que celui du reste dudit câble, hormis lesdites fibres optiques,
dans lequel chacun desdits éléments (15) de renfort est séparé des éléments de renfort voisins au moyen d'un séparateur (18) en un matériau plastique présentant une faible adhérence audit matériau FRP, lesdits séparateurs (18) étant disposés de sorte que deux éléments (15) de renfort adjacents ne se trouvent pas en contact l'un avec l'autre et sont séparés l'un de l'autre par une partie au moins de l'un desdits séparateurs (18), lesdits séparateurs étant constitués de minces rubans (18) ayant une largeur au moins égale à l'épaisseur dudit tube de renfort.

17. Câble selon la revendication 16 dans lequel lesdits séparateurs (18) sont disposés radialement par rapport à l'axe dudit câble.

18. Câble selon la revendication 16 dans lequel lesdits séparateurs (18) ont une section transversale en double biseau formant une pointe de sorte que lesdits éléments (15) de renfort s'emboîtent les uns dans les autres.

## Claims

1. A method of manufacturing a reinforced cable (10) containing optical fibers, the cable including an optical core assembly (13) containing at least one optical fiber (12) installed in a strength member, said optical core assembly being surrounded by a plurality of mechanical reinforcing members (15) made of a plastics material reinforced with reinforcing fibers, referred to as an "FRP" (Fiber-Reinforced Plastics) material, the reinforcing members being disposed helically around said core assembly so as to form a reinforcing tube therearound, said reinforcing members having a thermal expansion coefficient that is lower than those of the remaining portions of said cable and a Young's modulus that is higher than those of the remaining portions of said cable other than said optical fibers, said method including the following steps in order:
simultaneously manufacturing said reinforcing members on their own by coating said reinforcing fibers with the plastics material in which they are to be embedded, said material not being polymerized;
winding said reinforcing members around said optical core assembly, while interposing a separator made of a plastics material having low adhesion to said FRP material between each of said reinforcing members, so as to separate each of said reinforcing members from the adjacent reinforcing members by means of said separators which are disposed such that two adjacent reinforcing members are not in contact with each other and they are separated from each other by at least a portion of one of said separators (18); and
polymerizing said plastics material constituting said reinforcing members wound in this way.

2. A method according to claim 1, in which said separators (18) are made of a material chosen from fluorine-containing resins and polyester resins.

3. A method according to claim 1 or 2, in which said separators (18) are made of a material which retains its low-adhesion properties when it is subjected to high temperatures.

4. A method according to any one of claims 1 to 3, in which said separators (18) surround each of said reinforcing members entirely or partially.

5. A method according to any one of claims 1 to 4, in which said reinforcing members (15) are disposed directly on said optical core assembly (13).

6. A method according to any one of claims 1 to 4, in which said reinforcing members are disposed on a jacket surrounding said optical core assembly.

7. A method according to any one of claims 1 to 6, in which said reinforcing members (15) are disposed helically at an alternating pitch around said optical core assembly (13).

8. A method according to any one of claims 1 to 7, including a step of forming a protective outer jacket (19).

9. A method according to any one of claims 1 to 8, in which said optical core assembly (13) includes a tube inside which the optical fiber(s) (12) is/are disposed so as to be free.

10. A method according to any one of claims 1 to 8, in which said optical core assembly (13) includes a central grooved rod (21), the optical fiber(s) being disposed in the grooves in the rod (12).

11. A method according to any one of claims 1 to 10, in which said reinforcing fibers (16) are chosen from fibers made of aramid, of polyester, of glass, and of carbon.

12. A method according to any one of claims 1 to 11, in which said plastics material in which the reinforcing fibers (16) are embedded is chosen from an epoxy resin, and a polyester resin.

13. Apparatus (100) for implementing the method according to any one of claims 1 to 9, 11, and 12, including:
paying-out means (101) for paying out said optical core assembly along an axis referred to as the "advance axis";
reinforcing-fiber supply means (103) for supplying reinforcing fiber strands so as to bring said strands to the vicinity of said optical core assembly;
coating means (104) for coating said reinforcing fibers with the not yet polymerized plastics material in which they are to be embedded, said coating means being disposed between said reinforcing-fiber supply means and said advance axis, so that said reinforcing fiber strands arrive at said core assembly after they have been coated with said plastics material;
separator supply means (105) for bringing said separators to the vicinity of said optical core assembly;
winding means (112) for winding said reinforcing members and said separators around said optical core assembly;
said supply means (103) being disposed so that said reinforcing members are wound around said core assembly while being interposed between said separators;
a calibration die (106), disposed downstream from the section of the apparatus where separators and coated fiber strands are wound around said core assembly, for imparting the desired cross-section to the resulting reinforcing tube;
polymerization means (107) for polymerizing said plastics material of the reinforcing members, said means being disposed downstream from said calibration die; and
means (112) for winding the finished cable.

14. Apparatus according to claim 13, further including, when said separators are of width greater than the thickness of said reinforcing tube, means for surrounding each of said reinforcing members, partially or entirely, with said separators.

15. Apparatus for implementing the method according to any one of claims 1 to 8 and 10 to 12, including:
paying-out means for paying out said optical core assembly along an axis referred to as the "advance axis";
means for manufacturing an "outer" grooved rod around said optical core assembly, said separators being constituted by the ribs in said outer grooved rod;
reinforcing-fiber supply means for supplying reinforcing fiber strands so as to bring said strands to the vicinity of said optical core assembly;
coating means for coating said reinforcing fibers with the plastics material in which they are to be embedded, said coating means being disposed between said reinforcing-fiber supply means and said advance axis;
means for inserting said reinforcing fiber strands into the grooves in said outer grooved rod once they have been coated with said plastics material;
a calibration die, disposed downstream from the section of the apparatus where said coated fiber strands are inserted into said grooves in said outer grooved rod, for imparting the desired cross-section to the resulting reinforcing tube;
polymerization means for polymerizing said plastics material of the reinforcing members, said means being disposed downstream from said calibration die; and
means for winding the finished cable.

16. A reinforced cable containing optical fibers, the cable including an optical core assembly (13) containing at least one optical fiber (12) installed in a strength member, said optical core assembly (13) being surrounded by a plurality of mechanical reinforcing members (15) made of a plastics material reinforced with reinforcing fibers (16), referred to as an "FRP" material, the reinforcing members being disposed helically around said core assembly (13) so as to form a reinforcing tube therearound, said reinforcing members (15) having a thermal expansion coefficient that is lower than those of the remaining portions of said cable and a Young's modulus that is higher than those of the remaining portions of said cable other than said optical fibers, in which each of said reinforcing members (15) is separated from the adjacent reinforcing members by means of a separator (18) made of a plastics material that has low adhesion to said FRP material, said separators (18) being disposed such that two adjacent reinforcing members (15) are not in contact with each other and they are separated from each other by at least a portion of one of said separators (18), said separators being constituted by thin ribbons (18) having a width not greater than the thickness of said reinforcing tube.

17. A cable according to claim 16, in which said separators (18) are disposed radially relative to the axis of said cable.

18. A cable according to claim 16, in which each of said separators (18) has a double-bevel shaped cross-section forming a point, so that said reinforcing members (15) interfit.

## Patentansprüche

1. Verfahren zur Herstellung eines vestärkten faseroptischen Kabels (10) mit einer optischen Seele (13), die wenigstens eine, in einem Trägerelement angebrachte optische Faser (12) enthält, welche optische Seele von einer Vielzahl von mechanischen Verstärkungselementen (15) aus einem durch Verstärkungsfasern verstärkten plastischen Material, FRP-Material genannt, umgeben ist, welche um die Seele schraubenförmig angeordnet sind um ein Verstärkungsrohr um dieses zu formen, welche Verstärkungselemente einen kleineren thermischen Ausdehnungskoeffizienten als der Rest des Kabels, und einen höheren Young' schen Modul als der Rest des Kabels abgesehen von den optischen Fasern haben, wobei das Verfahren die folgenden Schritte in der Reihenfolge enthält:
Herstellung der Verstärkungselemente separat und gleichzeitig durch Überziehen der Verstärkungsfasern mit plastischem Material, in welches sie eingebettet werden sollen, wobei das Material nicht polymerisiert ist,
Wickeln der Verstärkungselemente um die optische Seele, wobei ein Trennmittel aus einem plastischen Material, das eine geringe Anhaftung an das FRP-Material zeigt, zwischen jedes Verstärkungselement eingefügt wird, um jedes Verstärkungselement von angrenzenden Verstärkungselementen durch die Trennmittel zu trennen, die so angeordnet sind, dass zwei angrenzende Verstärkungselemente keinen Kontakt miteinander haben und voneinander durch einen Teil wenigstens eines Trennmittels (13) getrennt sind, und
Polymerisation des plastischen Materials, wodurch die so gewickelten Verstärkungselemente gebildet werden.

2. Verfahren nach Anspruch 1, bei welchem die Trennmittel (13) aus einem Material bestehen, das aus den fluorierten Harzen und den Polyesterharzen gewählt ist.

3. Verfahren nach einem der Ansprüche 1 oder 2, bei welchem die Trennmittel (13) aus einem Material bestehen, dessen Eigenschaften einer geringen Anhaftung erhalten bleiben, wenn es hohen Temperaturen ausgesetzt ist.

4. Verfahren nach einem der Ansprüche 1 bis 3, bei welchem die Trennmittel (13) jedes der Verstärkungselemente ganz oder teilweise umgeben.

5. Verfahren nach einem der Ansprüche 1 bis 4, bei welchem die Verstärkungselemente (15) unmittelbar auf der optischen Seele (13) angeordnet sind.

6. Verfahren nach einem der Ansprüche 1 bis 4, bei welchem die Verstärkungselemente auf einer die optische Seele umgebenden Hülle angeordnet sind.

7. Verfahren nach einem der Ansprüche 1 bis 6, bei welchem die Verstärkungselemente (15) schraubenförmig mit alternierender Ganghöhe um die optische Seele (13) angeordnet sind.

8. Verfahren nach einem der Ansprüche 1 bis 7, welches einen Schritt zur Bildung einer äußeren Schutzhülle (19) umfasst.

9. Verfahren nach einem der Ansprüche 1 bis 8, bei welchem die optische Seele (13) ein Rohr aufweist, in dem die optische Faser(n) (12) frei angeordnet ist (sind).

10. Verfahren nach einem der Ansprüche 1 bis 8, bei welchem die optische Seele (13) ein gerilltes Mittelrohr (21) aufweist, in dessen Rillen die optische Faser(n) (12) angeordnet ist (sind).

11. Verfahren nach einem der Ansprüche 1 bis 10, bei welchem die Verstärkungsfasern (16) aus Fasern aus Aramid, Polyester, Glas und Kohlenstoff gewählt sind.

12. Verfahren nach einem der Ansprüche 1 bis 11, bei welchem das plastische Material, in dem die Verstärkungsfasern (16) eingebettet sind, aus einem Epoxyharz und einem Polyesterharz gewählt ist.

13. Vorrichtung zur Durchführung des Verfahrens nach einem der Ansprüche 1 bis 9, 11 und 12, welche umfasst:
Abspulmittel (101) zum Abspulen der optischen Seele längs einer als Abspulachse bezeichneten Achse,
Mittel zum Bereitstellen (103) von verstärkungsstapelfasern um die Stapelfasern in die Nähe der optischen Seele zu bringen,
Mittel zum Überziehen (104) der Verstärkungsfasern mit dem noch nicht polymerisierten plastischen Material, in das sie eingebettet werden sollen, wobei die Mittel zum Überziehen zwischen den Mitteln zum Bereitstellen der Verstärkungsfasern und der Abspulachse so angeordnet sind, dass die Verstärkungsstapelfasern auf Höhe der Seele ankommen, sobald sie vom plastischen Material überzogen sind,
Mittel zum Bereitstellen (105) von Trennmitteln (13) um die Trennmittel in die Nähe der optischen Seele zu bringen,
Mittel (112) um die Verstärkungselemente und die Trennmittel um die optische Seele zu wickeln, wobei die Mittel zum Bereitstellen (103) so angeordnet sind, dass die Verstärkungselemente um die Seele gewickelt und zwischen die Trennmittel eingefügt werden,
eine Kalibrierziehdüse (106), die stromabwärts des Abschnitts der Vorrichtung angeordnet ist, auf dessen Höhe die Trennmittel und Stapelfasern um die Seele gewickelt werden, um dem so gebildeten Verstärkungsrohr den gewünschten Querschnitt zu geben, Mittel (107) zum Polymerisieren des plastischen Materials der Verstärkungselemente, welche stromabwärts der Kalibrierziehdüse angeordnet sind, Mittel (112) zum Aufwickeln des fertigen Kabels.

14. Vorrichtung nach Anspruch 13, welche ferner, wenn die Trennmittel eine Breite größer als die Dicke des Verstärkungsrohrs aufweisen, Mittel aufweist um jedes Verstärkungselement mit den Trennmitteln teilweise oder ganz zu umgeben.

15. Vorrichtung zur Durchführung des Verfahrens nach einem der Ansprüche 1 bis 8, 10 bis 12, welche umfasst; Abspulmittel zum Abspulen der optischen Seele längs einer als Abspulachse bezeichneten Achse,
Mittel um einen sogenannten äußeren gerillten Stab um die optische Seele herzustellen, wobei die Trennmittel durch die Rippen des äußeren gerillten Stabs gebildet sind,
Mittel zum Bereitstellen von Verstärkungsstapelfasern um die Stapelfasern in die Nähe der optischen Seele zu bringen,
Mittel zum Überziehen der Verstärkungsfasern mit dem plastischen Material, in das sie eingebettet werden sollen, wobei die Mittel zum Überziehen zwischen den Mitteln zum Bereitstellen der Verstärkungsfasern und der Abspulachse angeordnet sind,
Mittel zum Einfügen der Stapelfasern in die Rillen des äußeren gerillten Stabs, sobald sie vom plastischen Material überzogen sind, eine Kalibrierziehdüse, die stromabwärts des Abschnitts der Vorrichtung angeordnet ist, auf dessen Höhe die überzogenen Stapelfasern in die Rillen des äußeren gerillten Stabs eingefügt werden um dem so gebildeten Verstärkungsrohr den gewünschten Querschnitt zu geben,
Mittel zum Polymerisieren des plastischen Materials der Verstärkungselemente, welche stromabwärts der Kalibrierziehdüse angeordnet sind,
Mittel zum Aufwickeln des fertigen Kabels.

16. Verstärktes faseroptisches Kabel mit einer optischen Seele (13), die wenigstens eine, in einem Trägerelement angebrachte optische Faser (12) enthält, welche optische Seele von einer Vielzahl von mechanischen Verstärkungselementen (15) aus einem durch Verstärkungsfasern verstärkten plastischen Material, FRP-Material genannt, umgeben ist, welche um die Seele schraubenförmig angeordnet sind um ein Verstärkungsrohr um dieses zu formen, welche Verstärkungselemente einen kleineren thermischen Ausdehnungskoeffizienten als der Rest des Kabels, und einen höheren Young'schen Modul als der Rest des Kabels abgesehen von den optischen Fasern haben, bei welchem jedes Verstärkungselement (15) von angrenzenden Verstärkungselementen durch einen Trennmittel (18) aus einem plastischen Material, das eine geringe Anhaftung an das FRP-Material zeigt, getrennt ist, wobei die Trennmittel (18) so angeordnet sind, dass zwei angrenzende Verstärkungselemente keinen Kontakt miteinander haben und voneinander durch einen Teil wenigstens eines Trennmittels (18) getrennt sind und die Trennmittel von dünnen Bändern (18) mit einer Breite, die wenigstens der Dicke des Verstärkungsrohrs gleich ist, gebildet sind.

17. Kabel nach Anspruch 16, bei welchem die Trennmittel (18) in Bezug auf die Achse des Kabels radial angeordnet sind.

18. Kabel nach Anspruch 16, bei welchem die Trennmittel (18) einen eine Spitze bildenden doppelt abgeschrägten Querschnitt haben, so dass sich die Verstärkungselemente (15) ineinander fügen.
